# EUROPEAN PATENT SPECIFICATION

(11) **EP 2 523 174 B1**
(45) Date of publication and mention of the grant of the patent: **04.10.2017**
(21) Application number: 12166343.9
(22) Date of filing: 02.05.2012
(51) Int. Cl.: G08G 1/16, G06T 7/00, G06K 9/00

(54) **Vision based night-time rear collision warning system, controller, and method of operating the same**
Sichtbasiertes Nacht-Rückkollisionswarnsystem, Steuerung und Verfahren zu Betrieb davon
Système d'avertissement de collision arrière nocturne basé sur la vision, contrôleur et son procédé de fonctionnement

(30) Priority: 12.05.2011 US 201113106367
(43) Date of publication of application: 14.11.2012
(73) Proprietor: Delphi Technologies, Inc., Troy, MI 48007 (US)
(72) Inventor: Dwivedi, Manoj, 560016 Bangalore, Karnataka (IN); Goermer, Steffen, 42281 Wupppertal (DE)
(74) Representative: Delphi France SAS

(56) References cited:
- EP-A2- 2 023 307
- GB-A- 2 452 929
- US-A1- 2008 062 010
- US-A1- 2010 091 513

## Description

### TECHNICAL FIELD OF INVENTION

The invention generally relates to a night-time rear collision warning system, and more particularly relates to determining if a bright spot in an image from a rear-view camera is the image of both headlights of an approaching vehicle fused together so the image of the vehicle appears to be a single bright spot.

### BACKGROUND OF INVENTION

Pre-crash warning/safety systems using radar and vision based detection technologies are knows. Such systems have predominately been directed toward detecting frontal collisions. However, one accident analysis indicates that rear-end collisions account for about half of the collisions that result in injury, in particular whiplash type injuries. It has been suggested that some collisions could be avoided and/or some injuries could be prevented, or at least reduced in severity, if the driver of the forward vehicle that is being collided with from behind, and the driver operating the vehicle approaching from the rear, were alerted or warned prior to the collision. Also, it has been suggested that various safety devices such as a movable headrest in the forward vehicle could be operated by such an early warning system so as to position the headrest to prevent or reduce the severity of a whiplash. Accordingly, a way to provide an advanced warning to either the driver of approaching vehicle, or the driver of the forward vehicle is desirable. GB-A-2452929 discloses a method using steps (a), (e) and (f) of claim 1.

### SUMMARY OF THE INVENTION

In the present invention, a method of operating a night-time rear collision warning system provided.

Further features and advantages of the invention will appear more clearly on a reading of the following detailed description of the preferred embodiment of the invention, which is given by way of non-limiting example only and with reference to the accompanying drawings.

### BRIEF DESCRIPTION OF DRAWINGS

The present invention will now be described, by way of example with reference to the accompanying drawings, in which:
Fig. 1 is a side view of a vehicle equipped with a rear collision warning system and being approached by another vehicle in accordance with one embodiment;
Fig. 2 is a flowchart of a method to determine if a rear collision is likely in accordance with one embodiment;
Figs. 3A and 3B are a flowchart of a method to determine if a bright spot corresponds to an approaching vehicle in accordance with one embodiment;
Fig. 4 is a flowchart of a method to classify a vehicle spot in accordance with one embodiment;
Fig. 5 is a flowchart of a method to determine if one of previously paired bright spots is missing from an image in accordance with one embodiment;
Fig. 6 is a flowchart of a method to determine if paired bright spots should continue to be paired in accordance with one embodiment;
Figs. 7A, 7B, and 7C are a flowchart of a method to determine if two bright spots should be paired in accordance with one embodiment;
Figs. 8A and 8B are a flowchart of a method to determine if a bright spot should be classified as a fused spot in accordance with one embodiment;
Figs. 9A, 9B, 9C, and 9D are a flowchart of a method to determine if a bright spot should be classified as a fog light in accordance with one embodiment;
Fig. 10 is a flowchart of a method to determine if a bright spot should be associated with another bright spot in accordance with one embodiment;
Fig. 11 is a flowchart of a method to determine if a fused spot has split into two bright spots in accordance with one embodiment; and
Fig. 12 is an example of an image from a rear view camera showing bright spots caused by headlights of an approaching vehicle.

### DESCRIPTION OF THE PREFERRED EMBODIMENTS

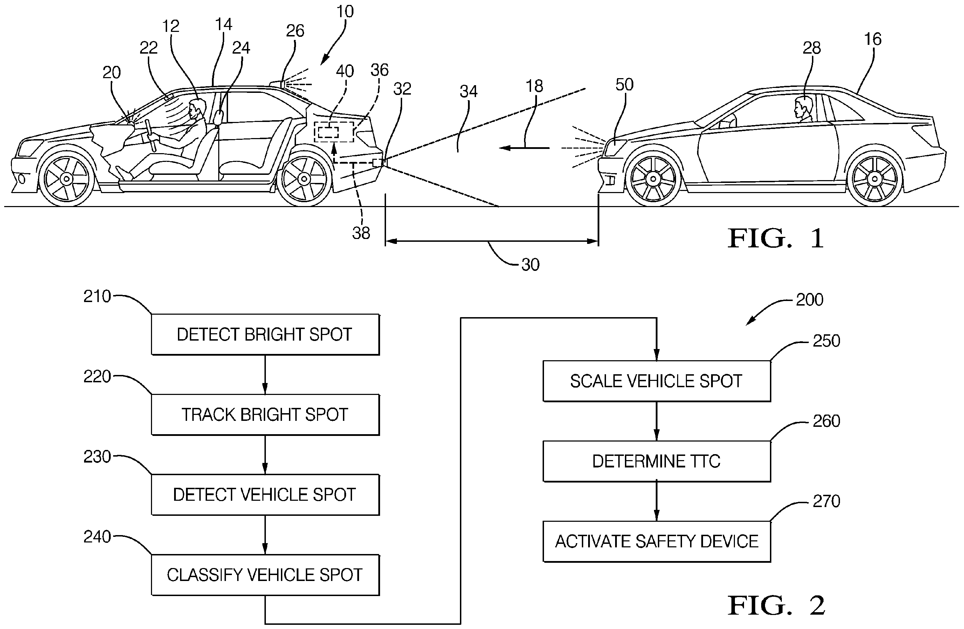

Fig. 1 illustrates a non-limiting example of a rear collision warning system 10. In general, the system 10 alerts an operator 12 of a vehicle 14 if a collision is likely with an approaching vehicle 16 that is approaching from behind the vehicle 14 and moving in a direction illustrated by an arrow 18. As used herein, a rear collision may be characterized as likely when the probability of a rear collision is high enough that the negative implications associated with distracting a driver from the task of operating the vehicle are considered to be overshadowed by the negative implications of not taking some action to warn and/or protect the driver. A non-limiting example of a test that may be useful to determine if a rear collision is likely is when the system 10 determines that a time until contact or a time to contact (TTC) is less than some threshold time, less than 0.5 seconds for example. In response to determining that a rear collision is likely, the system 10 may activate a safety device such as warning light 20 and/or sound a warning alarm 22 in the vehicle 14, if so equipped, to warn the operator 12. Another non-limiting example of a safety device is a movable headrest 24 in the vehicle 14 that can be operated (e.g. repositioned) by the system 10 prior to a rear collision in an effort to reduce the severity of a whiplash injury to the operator 12 if a collision does occur. The system 10 may also be configured to activate or flash a brake light 26, or other lights outside the vehicle 14, as a safety device intended to alert the other operator 28 of the approaching vehicle 16 with which a rear collision is deemed likely, and thereby encourage the other operator 28 to slow the approaching vehicle 16. Also, for a situation where the other operator 28 is tail-gating, flashing the brake light may encourage the other operator 28 to slow the approaching vehicle 16 in order increase a separation distance 30 between the vehicle 14 and the approaching vehicle 16.

In one embodiment, the vehicle 14 may be equipped with a rear-view camera 32 configured to output an image signal 38. The rear-view camera 32 may be installed in the vehicle 14 such that the rear-view camera 32 can be oriented to provide an image signal 38 corresponding to a field of view 34 behind the vehicle 14; the field of view 34 being useful to detect the approaching vehicle 16 at a distance sufficient to allow for providing an advanced warning of a likely collision with the approaching vehicle 16. For example, the rear-view camera 32 may be installed on a rear bumper of the vehicle 14. Many vehicles are already equipped with rear-view cameras as part of back-up assist, parallel parking assist, and/or systems, and so using the already available rear-view camera 32 for collision warning, instead of equipping the vehicle 14 with another sensor technology such as radar, helps to avoid undesirable increases to the overall cost of the vehicle 14.

The system 10 may include a controller 36 coupled to the rear view camera 32 and configured to receive the image signal 38. The controller 36 may include a processor 40 such as a microprocessor or other control/processing circuitry as should be evident to those in the art. The controller 36 may include memory (not shown), including non-volatile memory, such as electrically erasable programmable read-only memory (EEPROM) for storing one or more routines, thresholds and captured data. The one or more routines may be executed by the processor 40 to perform steps for determining if signals such as the image signal 38 indicate that a rear collision is likely, or the risk or a rear collision is likely, as described herein. The controller 36 may also be coupled to or interconnected with the warning light 20, the warning alarm 22, the headrest 24, the brake light 26, or other devices on the vehicle 14 (interconnections not shown) in order to enable operation/activation of theses devices if the controller 36 determines that a rear collision is likely.

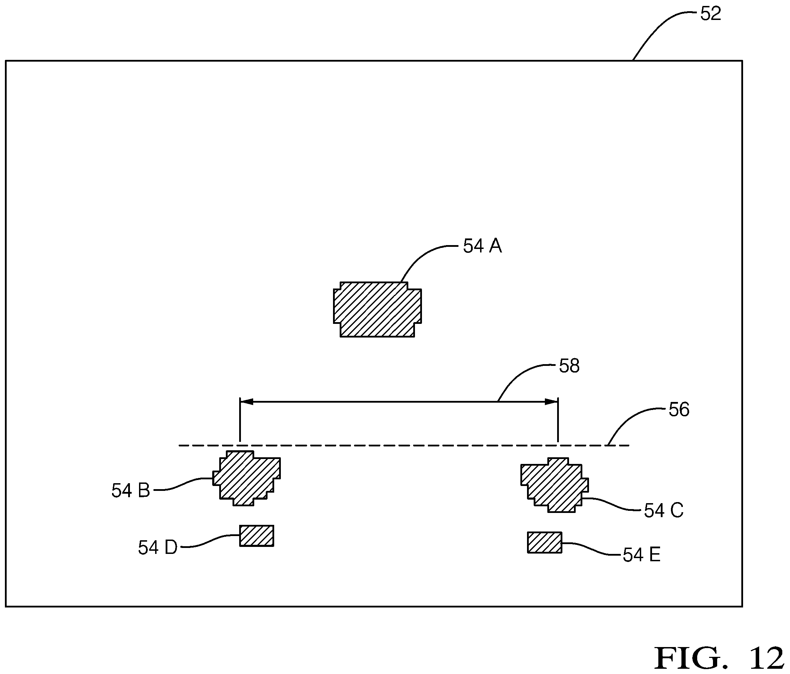

A non-limiting example of a way for the controller 36 or the processor 40 to process the image signal 38 is to, in effect; convert the image signal 38 into a sequence of images. As used herein, the sequence of images are not necessarily images that are actually displayed to the operator 12 for the purpose of determining if a rear collision is likely, however the sequence of images could be displayed to the operator 12. For the purpose of explanation, references herein to 'image' are understood to be a two dimensional array of data indicating light intensity at a pixel location corresponding to the three dimensional area in the field of view of the rear-view camera 32. Fig. 12 illustrates an example image 52 that is explained in more detail below. The images are then in a form that the controller 36 can interpret. The amount of area covered by each pixel is dependent on the resolution of the camera (higher resolution = smaller image portion per pixel) and the zoom angle of the camera lens (wider angle = larger field of view portion per pixel).

As will become evident, the system 10, the controller 36, and methods of operating the same set forth in the following description are particularly well suited to, detecting an approaching vehicle at night because the algorithms are generally optimized for detecting light sources such as, but not limited to, a headlight 50 of the approaching vehicle 16. In general, the images are used to estimate a location of light sources relative to the vehicle 14, light sources such as approaching vehicle headlights, roadway lights, and the like. Then, by tracking these light sources over a sequence of images, and classifying the light sources a being from an approaching vehicle or otherwise, the likelihood of a rear collision may be determined.

In one embodiment the controller 36 may be configured to determine if an image (Fig. 12) in the sequence of images includes a bright spot indicative of a vehicle spot. As used herein, the term 'bright spot' is used to refer to a location in an image that suggests the presence of a light source because it appears to be substantially brighter than the area surrounding the location. For example, if the image includes one pixel, or a plurality of pixels in a cluster, indicating that a light source may be displaying light with an intensity greater than a threshold value, the one or more pixels in a cluster may be designated as a bright spot. However, designating a bright spot may not include a determination as to what may be causing the bright spot. For example, a bright spot may be caused by a headlight of an approaching vehicle 16, or may be caused by fixed lights illuminating the roadway, or may be caused by light illuminating a roadway sign. Furthermore, as used herein, the term 'vehicle spot' is used to refer to a bright spot that has been determined or classified as having characteristics consistent with vehicle headlights, and not roadway lights, building lights, the moon, aircraft and other sources of light. As will be discussed in more detail below, a vehicle spot typically includes a pair of bright spots corresponding to both headlights of a vehicle, but in certain instances may include only a single bright spot, and so may be subject to different analysis routines.

Fig. 2 illustrates an algorithm or method 200 that, in general, suggests steps that may be taken to analyze an image signal 38 from the rear-view camera 32 in order to estimate a time to collision (TTC) based on bright spots indicated in the image signal 38. Prior to the steps listed below, a current image or frame is captured by the camera 32 and represented in the form of an array of pixel values corresponding to light intensity for each pixel may be stored in the controller 36.

Step 210, DETECT BRIGHT SPOT, may detect one or more bright spots in the image signal 38 by designating a pixel or a cluster of pixels having light intensity values greater than a threshold as likely to be from a light source of interest. The detection may be based on adaptive threshold that uses statistical analysis of light levels across the field of view to determine a threshold for detecting a bright spot its parameters. Typically, only the brightest of the bright spots in the camera image are of interest as it is an approaching vehicle that is of interest. As such, camera parameters can be optimized to accentuate the brightest of the bright spots. For example, it has been observed that a relatively short exposure image may show the vehicle headlights more clearly. A location on an image may be classified as a bright spot based on how may adjacent pixels are saturated, that is how many adjacent pixels indicate a maximum light intensity value, or indicate a light intensity value above a threshold. If the number of pixels is too low, the light is likely to be from some a source other than an approaching vehicle headlight, for example a roadway streetlight, and so may not be considered a bright spot worth further consideration by the system 10. Step 210, DETECT BRIGHT SPOT, may create a list of bright spots that includes an indication of position, size, and light intensity related parameters. Also, based on the position in the image, the bright spot may be marked as being in a 'sky area' of the image. The bright spot may also include other information indicating that the bright spot may be a potential fused spot, paired spot, or potential fog light spot as described in more detail below.

Step 220, TRACK BRIGHT SPOT, may track a bright spot over multiple image frames to determine a trajectory of the bright spot, for example by using known motion flow analysis techniques. In general, rearview cameras (32) in rear collision/tailgate warning systems and the like have wider fields of view than cameras typically used for forward viewing applications. The wider field of view is useful to tracks objects that are relatively close to the vehicle, for example at separation distances less than 50 meters. As such, the movement of a bright spot in the image may be higher than in forward viewing systems. In order to keep track of a bright spot from image to image, a correlation gate or boundary may be extended to the beyond the saturated pixels of the bright spot in anticipation of future motion for associating a bright spot in a subsequent image with a bright spot in a previous image. In general, Step 220, TRACK BRIGHT SPOT, associates bright spots from individual images as being from the same bright spot to identify individual track IDs. As such, the track IDs are unique for each bright spot across multiple image frames. The track IDs may also include information regarding whether a track ID is active or tentative. All new tracks are considered tentative until a track ID persists consistently for a few frames, and then the track ID is considered to be active. The track ID may also characterized a bright spot as 'found' or 'not found' for the current frame depending on whether the association was successful or not.

Step 230, DETECT VEHICLE SPOT, in general, checks every detected and tracked bright spot in a just received image, and seeks to pair an isolated bright spot with another bright spot to form a vehicle spot that includes a pair of bright spots based on their size, shape, location and other similarity parameters. Step 230, DETECT VEHICLE SPOT and Step 240, CLASSIFY BRIGHT SPOT (see below) may create a list of pairs of individual bright spots. The paired data structure may include the individual track IDs of each bright spot, a combined pair ID derived from individual track IDs, a classification counter, a classified status, a bounding box of combined pair, an age of the pair, a count of valid frames, a count of lost frames, and/or various similarity values and history of the pair. For a fused spot (see below), the individual track IDs are same for the pair. The paired data may also include old pair size information to identify split of a fused spot. During Step 230, DETECT VEHICLE SPOT, the same track ID could be part of multiple vehicle pairs. Step 240, CLASSIFY VEHICLE SPOT may resolve this ambiguity and at the end of classification indicate one track ID as part of only one vehicle pair.

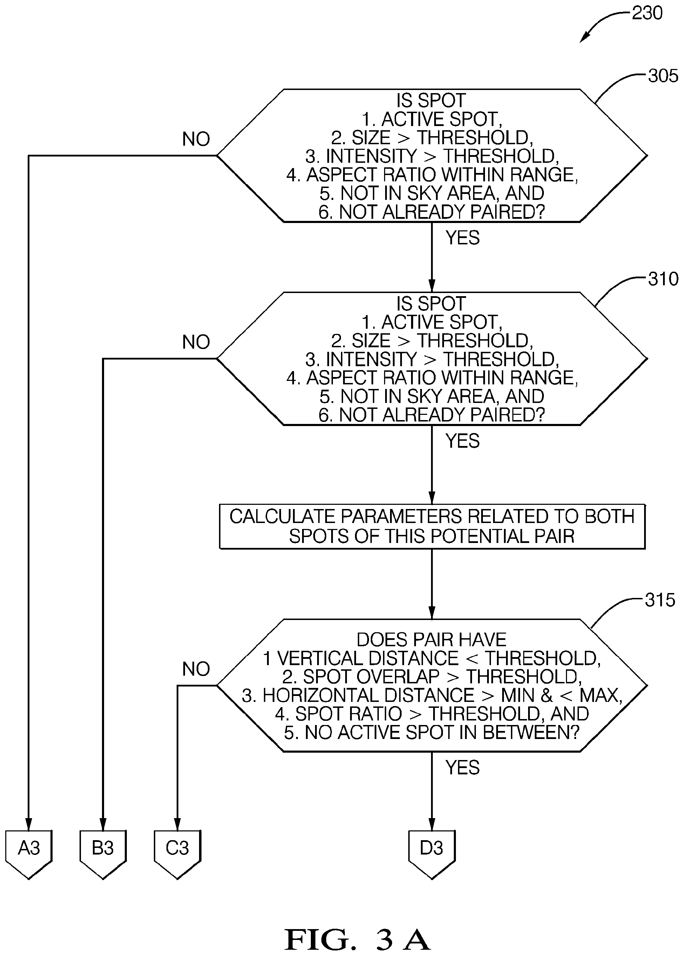

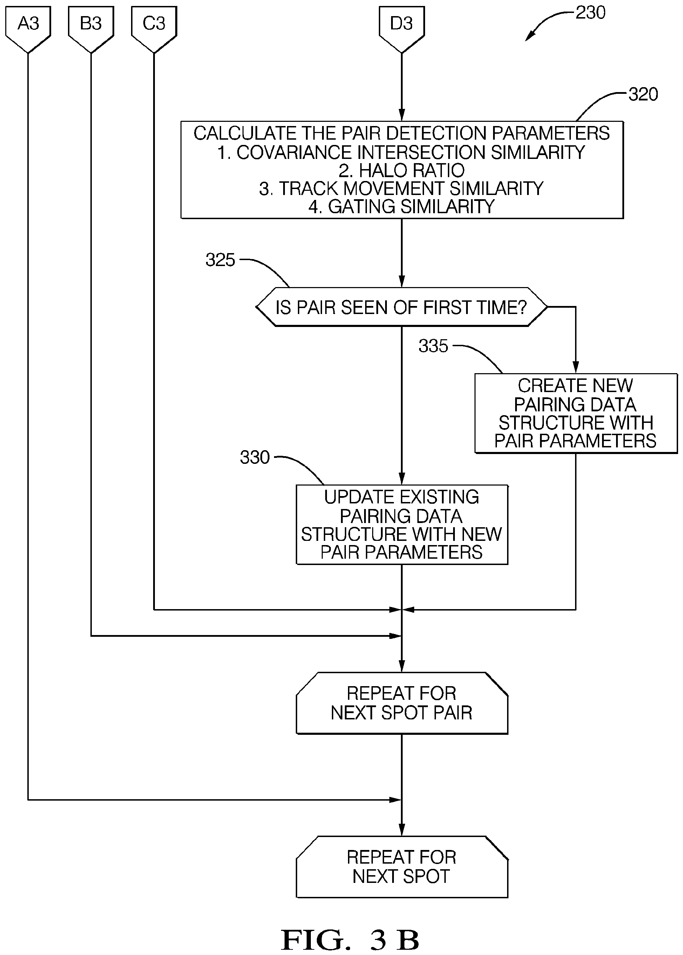

Fig. 3 illustrates a non-limiting example of a method to perform Step 230 (Fig. 2) beginning with Step 305. In general, Step 230 begins with selecting two of the bright spots detected in Step 210 and tracked in Step 220, and then determines if the two bright spots should be paired. As suggested in Step 305, if one of the two bright spot fails to meet any of the several criteria shown in Step 305, then that bright spot is deemed to be not suitable for pairing with another bright spot, and so the rest of the steps for Step 230 are bypassed for that bright spot. A non-limiting lists of criteria may include: 1) Is the bright spot an active spot (i.e. - a bright spot that has been tracked in previous images), 2) is the bright spot size larger than a size threshold (i.e. - number of pixels greater than a threshold), 3) is a light intensity of the bright spot (e.g. cumulative value of pixel intensity value for each pixel in the bright spot) greater than a threshold, 4) is an aspect ratio of the bright spot within a aspect ratio range indicative of a vehicle headlight, 5) is the bright spot at a location that does not correspond to a sky portion of the field of view 34, 6) and is the bright spot not previously paired with another bright spot?

Step 310 may perform a similar criteria test on the second of two bright spots as part of a screening process to identify a bright spot suitable to consider for pairing with the first bright spot evaluated in Step 305. Here again, if a second bright spot fails to meet any one of several similar criteria, the remainder of step 230 may be bypassed for that bright spot.

Step 315 compares the two spots evaluated in Step 305 and Step 310 to see if the two bright spots are suitable for pairing. The following is a non-limiting example of requirement tests that may be performed. 1) The two spots shall be in similar vertical position within image. This may be determined based on difference in vertical pixel position of the pairing spots, the presence of spot overlap, and the relative sizes of the potential bright spot pair. If the pixel position difference of both spots is less than a threshold, and the spots have a relatively high degree of overlap when a horizontal line is drawn across the image through one of the bright spots, the two bright spots may be from the same vehicle. 2) The two spots shall not be too far apart or too close horizontally in the image. The range of allowed horizontal difference between the spots for pairing may depend on the sizes of the bright spots. For example, if the spots are too close, they may be bright spots from two separate headlights on the same side of the approaching vehicle 16, i.e. the vehicle has four headlights, two side-by-side lights on each side of the approaching vehicle 16. 3) The two spots shall be of similar size. A potential pairing of very large spot with a very small spot is not allowed since they are unlikely to belong to same vehicle. 4) The two spots shall not reside in sky area. This is to avoid pairing of street lights and identifying them as vehicle lights. 5) There shall not be any active spot between the two spots. If an in-between active spot is detected, it may indicate an undesirable pairing since no light is normally present in between.

Step 320 illustrates several pair similarity parameters that may be determined based on a matrix of pixel values corresponding to each bright spot (matrix A and B) to evaluate the suitability of two bright spots for pairing such as: 1) Covariance Similarity based on covariance and determinant of A and B, 2) Halo-Ratio Similarity based on ratio of smaller halo-ratio to bigger halo-ratio of A and B, 3) Tracking Similarity based on dy/dt for both bright spot tracks to see if changes in vertical position of each bright spot track, 4) Gating Similarity - a ratio of estimated distance based on horizontal distance between bright spots on image (ratio of estimated minimum value to estimated maximum value. Other tests not shown in Step 320 may include: Estimated distance based of size of bright spots with a variable multiplier where the variable multiplier is different for different sized spots (higher for bigger spots), and Size Similarity base on a ratio of the size of the bright spots.

Step 325, FIRST TIME PAIR, checks to see if the bright spots paired in the current image were paired in previous images. It is notable that each image is analyzed for pairing without relying on prior pairing. This is done because it is believed that this pairing process is more robust than an alternative process of presupposing that a pair from a previous image should be paired in the current image and so possibly reducing the chance of discovering that previously paired bright spots should not have been paired. Step 230 as illustrated in Fig. 3 may be repeated until all possible combinations of bright spots are evaluated before proceeding to the next step in method 200.

Referring again to Fig 2, the method 200 may proceed to Step 240, CLASSIFY VEHICLE SPOT. In general, Step 240 begins with a list of all the vehicle spots in the image, and an indication that a given vehicle spot is a based on paired bright spots or based on an isolated bright spot that was not paired with another bright spot. Step 240 generally seeks to classify each of the vehicle spots. In particular, Step 240 classifies each of the vehicle spots so that, for example, multiple vehicle spots are not mistakenly interpreted as coming from separate vehicles, and that vehicle spots based on isolated bright spots are not ignored as being indicative of a vehicle. These and other examples are explained in more detail in the following description.

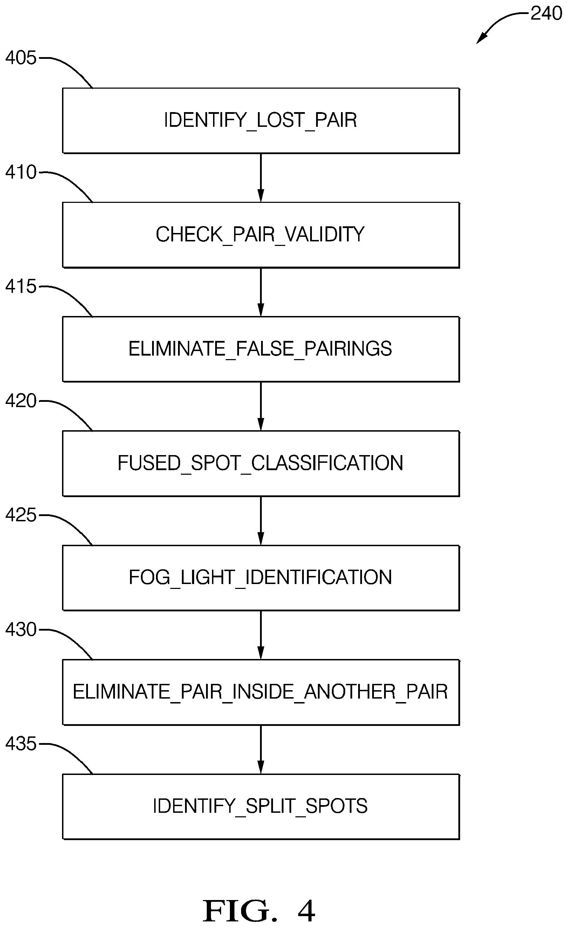

Fig. 4 illustrates a non-limiting example of a method to perform Step 240 beginning with Step 405, IDENTIFY LOST PAIR. Step 405 is generally directed to identifying a vehicle spot that was previously based on paired bright spots, but in the most recent image is now based on an isolated bright spot. Such a change may be due to, for example, failing a similarity parameter test (Step 320, Fig. 3) or the like. By way of an example, such a situation may arise if the roadway is wet and so mist generated by the lead vehicle may momentarily obscure one portion of the field of view more than another portion. In this case, if the second bright spot of the previous pair is still present in the image, then following some additional testing, the vehicle spot may be re defined as being based on paired bright spots. As such, the system 10 and the controller 36 maybe in accordance with claim 3, wherein the controller is further configured to classify the vehicle spot as a lost pair spot if a subsequent image indicates that the vehicle spot includes only one of the pair of bright spots.

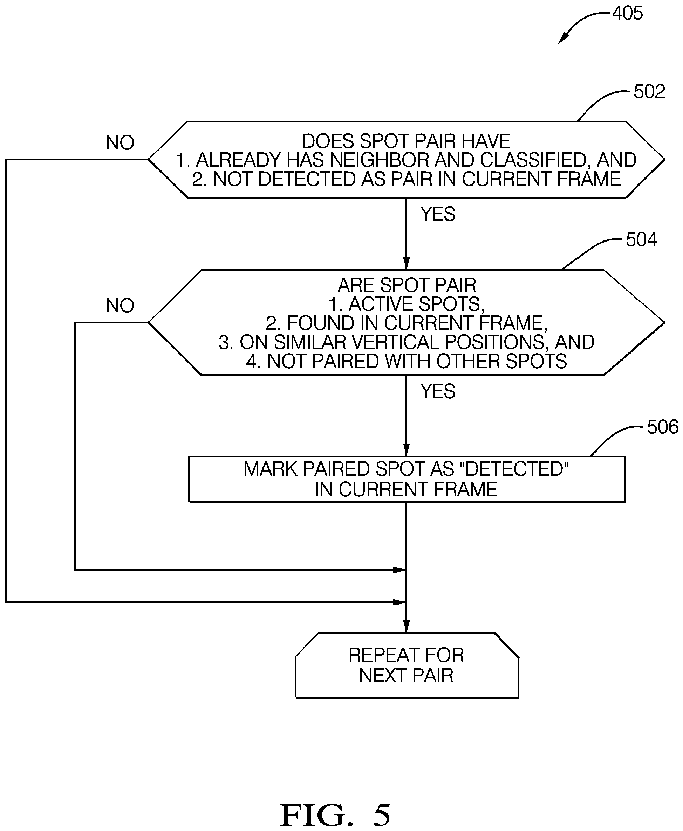

Fig. 5 illustrates a non-limiting example of a method to perform Step 405 (Fig. 4) beginning with Step 502. In Step 502, if a particular vehicle spot in the current image is based on an isolated bright spot and not previously based on paired bright spots, then Step 405 may continue to Step 504 to determine if a vehicle spot should have been based on a bright spot pair. If the particular vehicle spot is currently based on paired bright spots, or was not based on paired bright spots in a previous image, the remainder of Step 405 may be bypassed. Step 504 suggest several tests that may be performed to determine if the previously paired bright spots should be re-paired. The tests may include, but are not required or limited to - Are previously paired bright spots both 1) active bright spots (i.e. - bright spots that has been tracked in previous images), 2) found in current image, 3) have similar vertical position, and 4) not paired with another bright spot? If YES, then if Step 506, the vehicle spot may be designated as being based on paired spots.

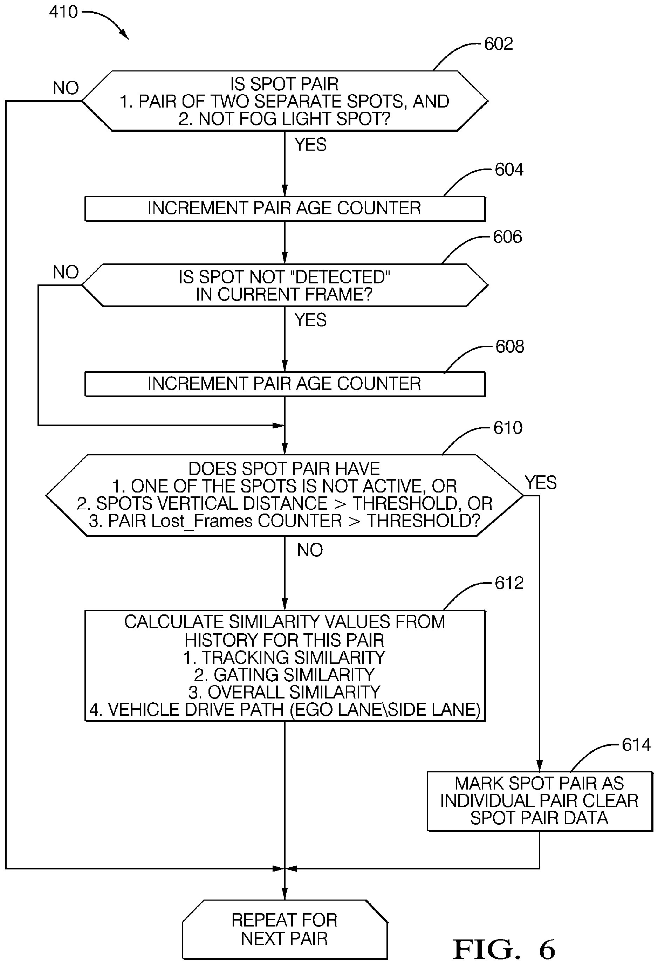

Referring again to Fig. 2, Step 240, VEHICLE SPOT CLASSIFICATION, is illustrated with more detail in Fig. 4 and step 410, CHECK PAIR VALIDITY, is illustrated in more detail in Fig. 6 beginning at step 602.

Fig. 6 illustrates a non-limiting example of Step 410 (Fig. 4), following Step 405 above, Step 410 checks once again whether the vehicle spot is correctly based on paired bright spots. If yes, various pair spot similarity parameters such as those described with regard to Step 320 may be determined for classification. If no, the pair "lost count' is incremented and if the "lost count" exceeds a threshold or one of the spots of the pair is no longer present, the pair is cancelled. The detail is as shown in flowchart below (Fig. 6). By this, the system 10, and in particular the controller 36 may be configured to determine if the image includes a pair of bright spots indicative of a vehicle spot.

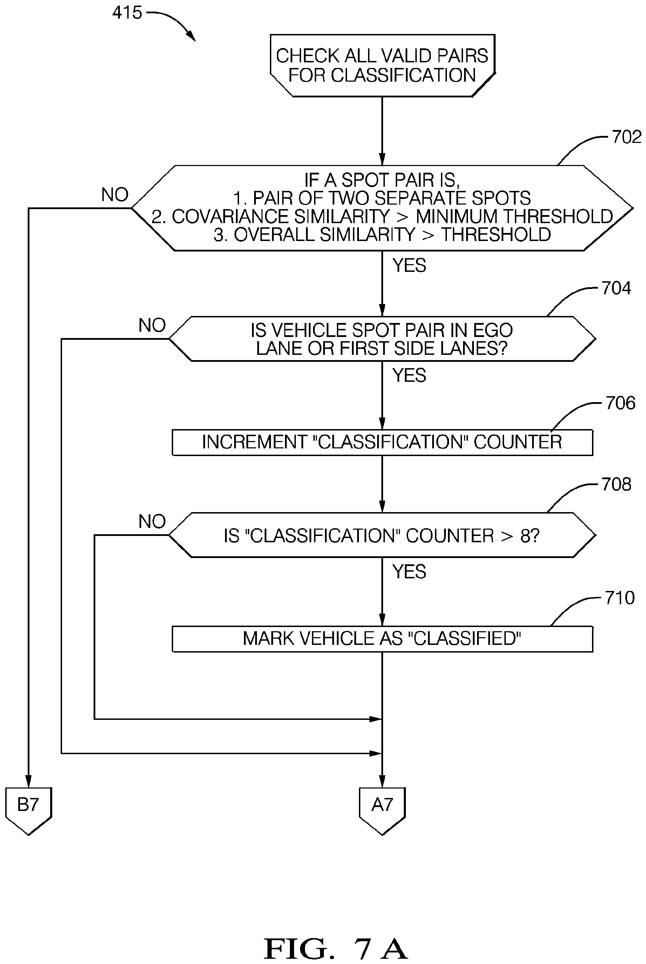

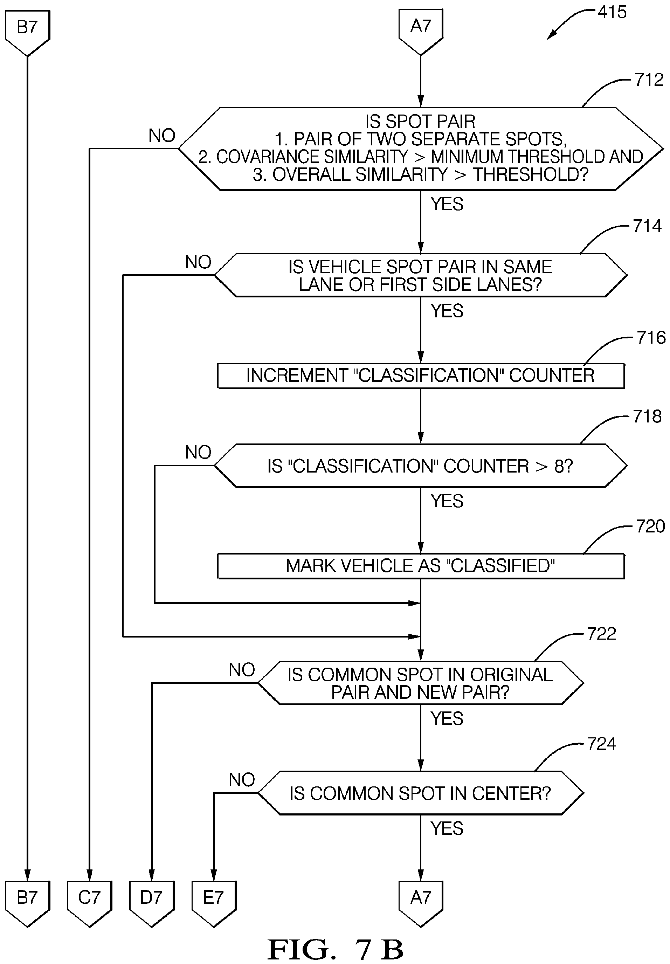

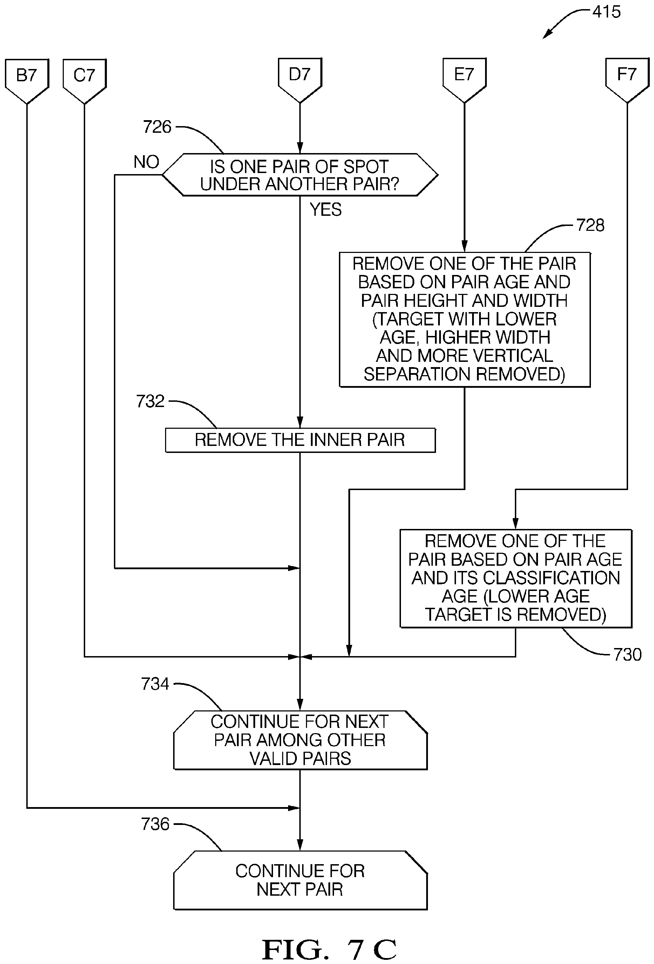

Referring again to Fig. 2, Step 240, VEHICLE SPOT CLASSIFICATION, is illustrated with more detail in Fig. 4 and step 415, ELIMINATE FALSE PAIRING, is illustrated in more detail in Fig. 7 beginning at step 702. In general, step 415 cross checks vehicle spots that are based on paired bright spots by comparing vehicle spots with each other based on similarity and performs their classification once the spots are similar for multiple frames. If the similarity does not exist, no classification is performed. The step also checks if a common spot is shared by multiple pairs. If yes, the spot pairs are compared with each other based on the age of pairing, the age of classification and the height and width of the spot pairs. The thumb rule used is that an older classified pair is kept as classification compared to a new pair unless the old pair has higher width and more vertical separation than new pair.

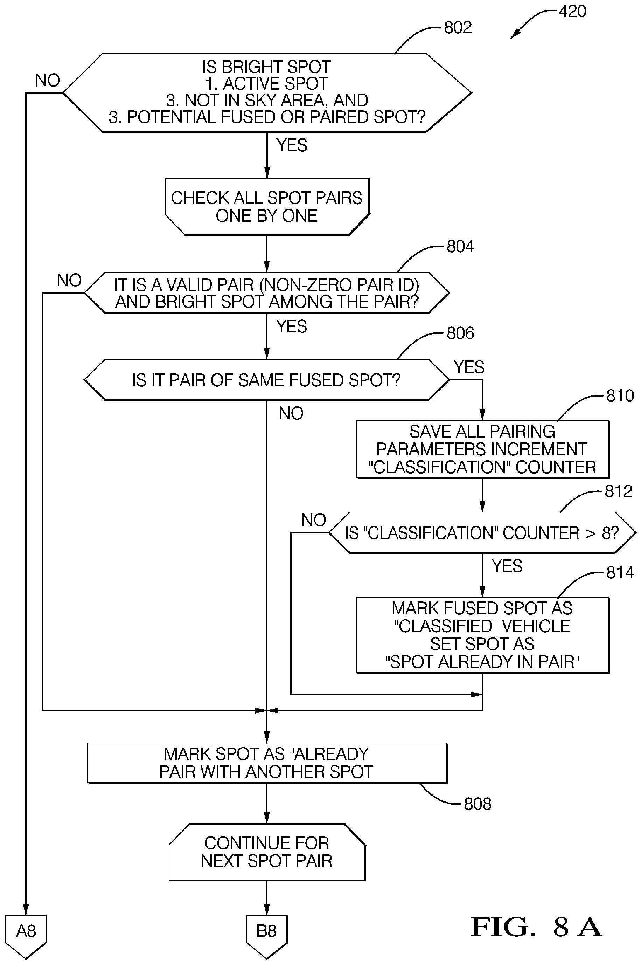

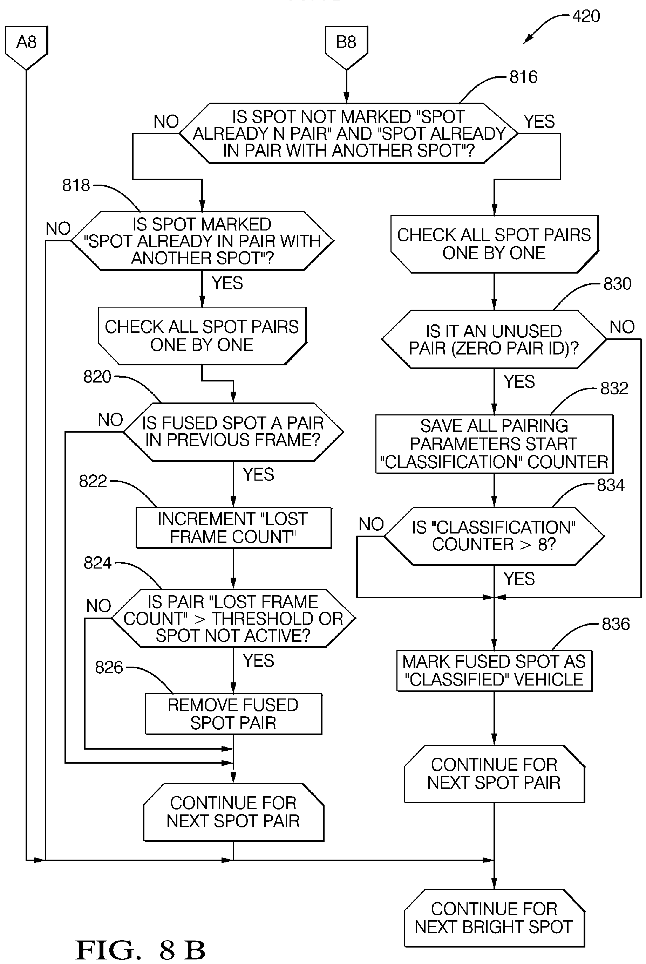

Referring again to Fig. 2, Step 240, VEHICLE SPOT CLASSIFICATION, is illustrated with more detail in Fig. 4 where step 420, FUSED SPOT CLASSIFICATION, is shown and is illustrated in more detail in Fig. 8 beginning at step 802. In general, Step 420 is directed to determining if a vehicle spot based on an isolated bright spot has characteristics consistent with a approaching vehicle 16 that is so far away that the vehicle headlights appear to be a single bright spot and so may be characterized as being fused together to form a vehicle spot based on a fused spot. In one embodiment, the system 10, and the controller 36 may be configured to classify a vehicle spot as a fused spot if the vehicle spot has a saturated pixel count greater than a fused spot threshold. A bright spot may be observed over multiple images and then classified as a fused vehicle spot. In case the fused vehicle spot is paired with any other neighbor (i.e. - nearby) bright spot during this time, the fused spot classification is cancelled. The fused spot algorithm is especially well suited to detect an approaching vehicle following that has high beams ON. A bright spot due to high beam are typically very bright and may appear as a relatively large bright light blob in the image from the camera. This may be due to high amount of pixel saturation even with a short exposure time. Consequently, the two light sources corresponding to one vehicle may not be separable in the image. The fused spot algorithm may classify that a bright spot as a fused bright spot by determining that the bright spot has a relatively high concentration of saturated pixels. Normally it takes 5-8 image frames to confirm that bright spot exists and is seen consistently. The track status become active once this happens. A vehicle spot based on a fused bright spot may then be processed in a manner similar to vehicle spots based on paired bright spots for reasons of simplicity and consistency.

Fig. 8 will now be described. In general, bright spots in new image are first individually analyzed and then pairing is attempted. If a bright spot is not paired because it does not meet the criteria for pairing, then it may be classified as a fused spot. Step 802 may confirm the presence of a bright spot by verifying that the bright spot is 1) an active spot (i.e. - a bright spot that has been tracked in previous images), 2) not in a sky area, and 3) is a potential fused spot or paired spot based on the size and shape of the bright spot. If any of these conditions are not satisfied, the bright spot is likely not a fused spot and so the rest of step 420 is bypassed.

Step 804 checks if the potential fused vehicle spot has already been paired with another bright spot. If yes, the step 806 further checks if the bright spot is paired with same spot. That happens when the bright spot is already considered as a fused vehicle spot in previous frames. If yes, the bright spot classification counter is increased in step 810 and once it reaches a threshold as provided in step 812, the bright spot is classified as fused vehicle spot as marked in step 814. The step 814 further marks the bright spot as "spot already in pair". If the bright spot is paired with another bright spot, the step 808 marks the bright spot as "spot already paired with another spot". The step 816 checks if the potential fused vehicle spot is already marked as "spot already in pair" OR "spot already paired with another spot". If both these conditions are not correct, the bright spot is considered as a new fused vehicle spot and an available and unused ID is assigned to the spot (step 830). The bright spot classification counter is increased in step 832 and once it reaches a threshold as provided in step 834, the bright spot is classified as fused vehicle spot as marked in step 836. If the spot is marked as "spot already paired with another spot" as checked in step 818, the bright spot is checked if the spot was previously marked as fused vehicle spot. This is to check for conditions where the bright spot was earlier considered as fused vehicle and now it is paired with another neighbor spot. The fused vehicle spot pair "lost count' is incremented (step 822) and if the "lost count" exceed a threshold (step 824) the fused spot pair is cancelled (step 826).

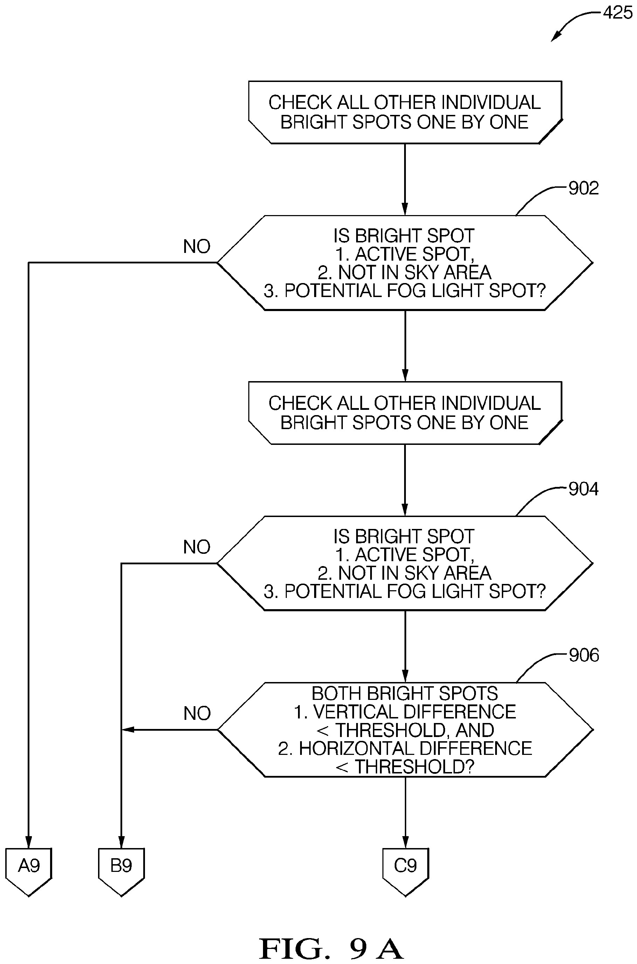

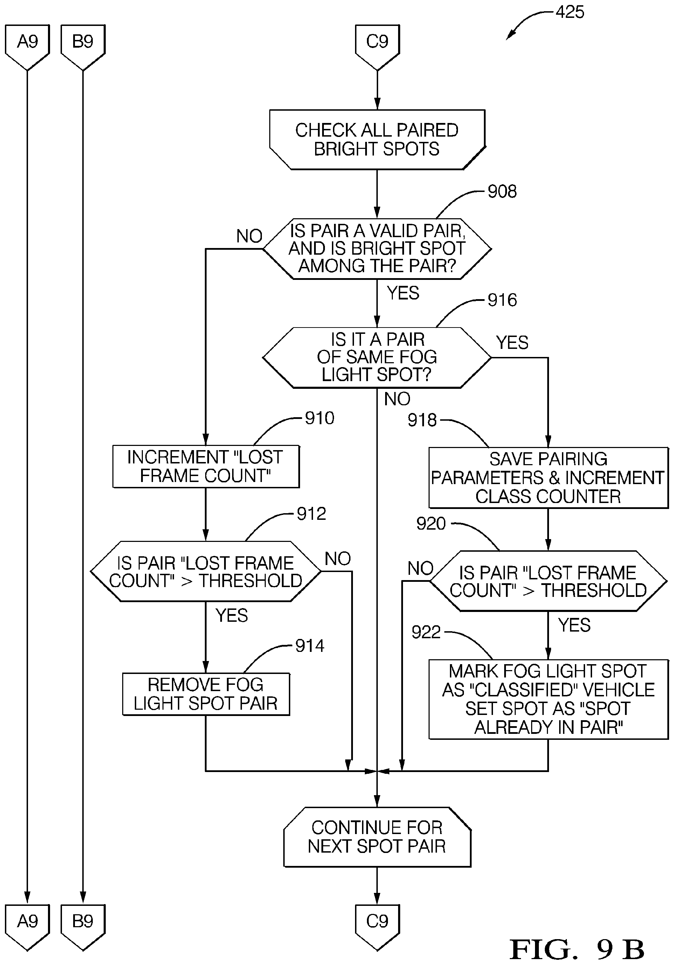

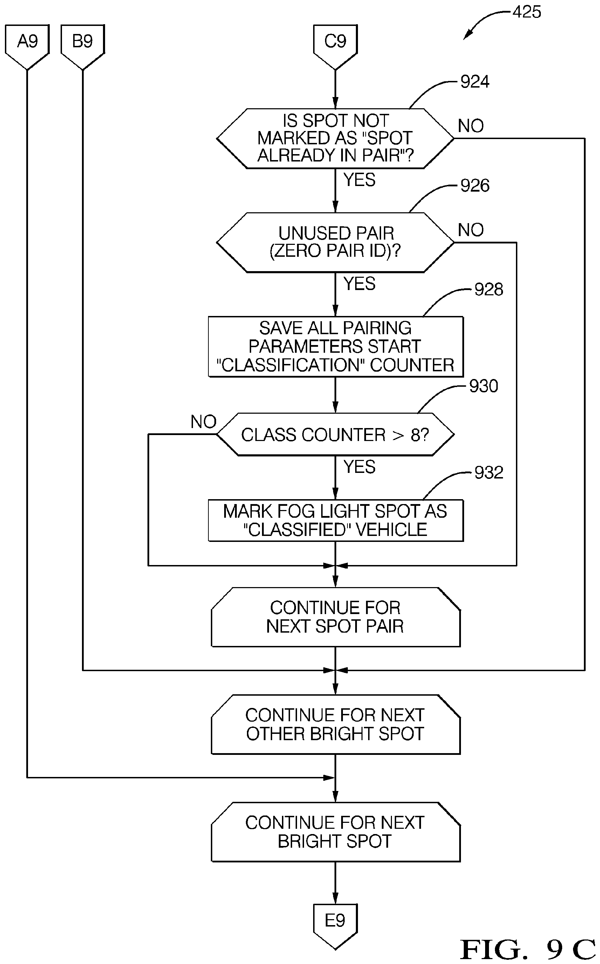

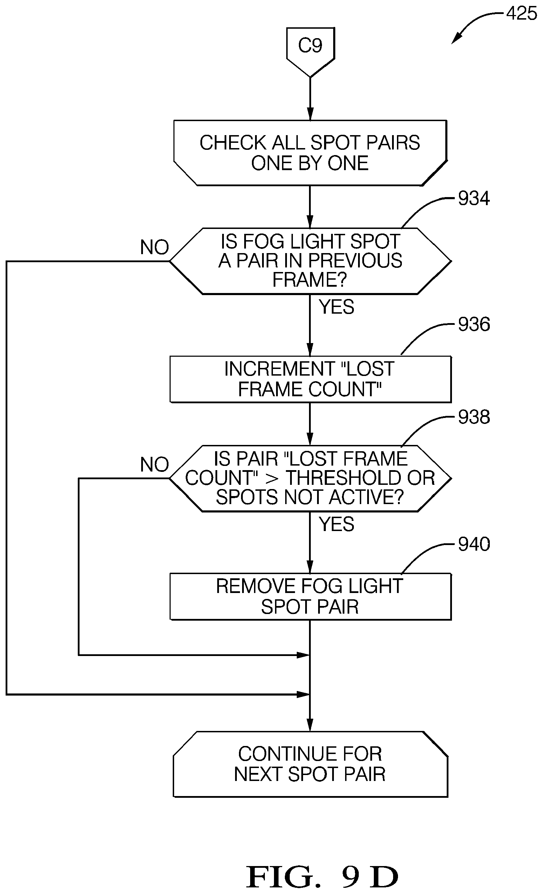

Referring again to Fig. 2, Step 240, VEHICLE SPOT CLASSIFICATION, is illustrated with more detail in Fig. 4 where step 425, FOG LIGHT IDENTIFICATION, is shown and is illustrated in more detail in Fig. 9. In general, Step 425 is directed to determining if a second vehicle spot based on paired bright spots are fog lights and so should be associated with a first vehicle spot based on another pair of bright spots and so avoid interpreting the two vehicle spots as two distinct vehicles. Step 902 checks if a two distinct bright spots are marked as potential fog light spot and are not in sky area. If yes, the spots are observed for their vertical and horizontal separation and classified as pair of fog light spots if they have separation within threshold. By this, the system 10, and controller 36, may be configured to determine if the vehicle spot includes an additional bright spot classifiable as a fog light.

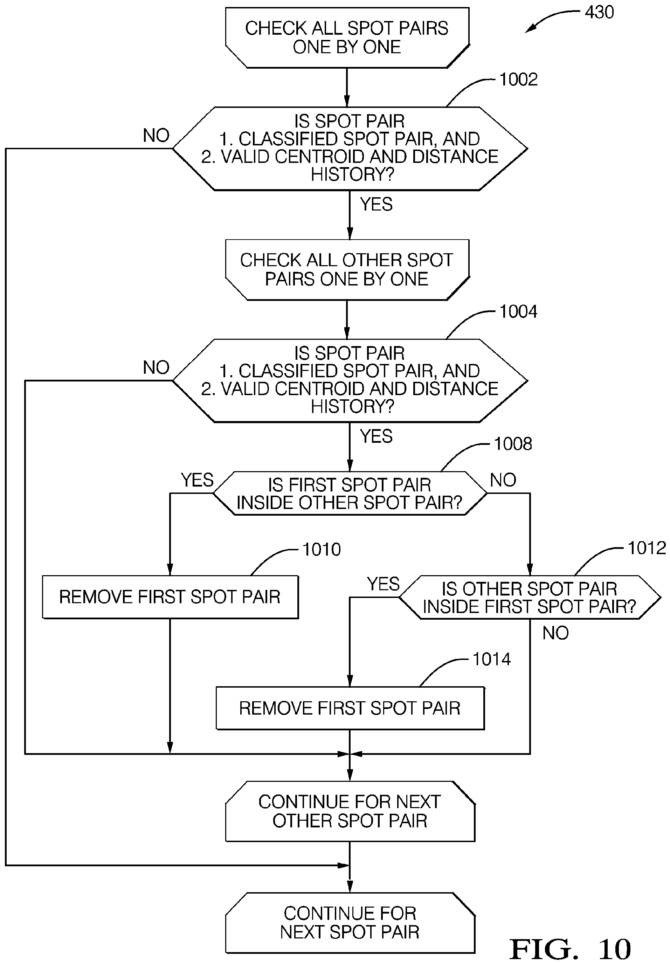

Referring again to Fig. 2, Step 240, VEHICLE SPOT CLASSIFICATION, is illustrated with more detail in Fig. 4 where step 430, ELIMINATE PAIR INSIDE ANOTHER PAIR, is shown and is illustrated in more detail in Fig. 10. In general, Step 430 is directed to determining if a second vehicle spot based on paired bright spots should be associated with a first vehicle spot so that the two vehicle spots and so avoid interpreting the two vehicle spots as two distinct vehicles. By way of an example, and not limitation, Step 430 is directed to a condition where the approaching vehicle 16 is relatively close, and the system detects multiple bright spots within one headlight of the vehicle. It has been observed that this happens more often with low beams and at a separation distance 30 of less than 10 meters. Also, there could be pairing of the two headlights and multiple pairs within each headlight. Step 1002 if checks a first vehicle spot based on a first pair of bright spots has a valid classification history and a second vehicle spot based on a second bright spot pair is detected inside another spot pair, the inside spot pair is cancelled and removed. By this, the system 10, and the controller 36 may be configured to determine if the vehicle spot includes an additional bright spot classifiable as a multiple bright spot.

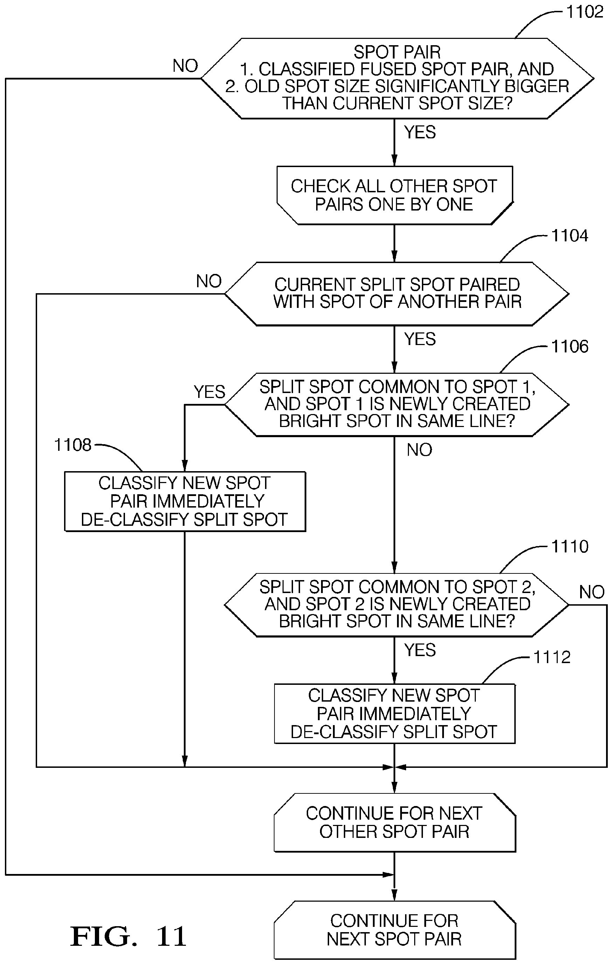

Referring again to Fig. 2, Step 240, VEHICLE SPOT CLASSIFICATION, is illustrated with more detail in Fig. 4 where step 435, IDENTIFY SPLIT SPOTS, is shown and is illustrated in more detail in Fig. 11. In general, Step 435 is directed to determining if a vehicle spot previously classified as a fused spot split into two distinct bright spots because the approaching vehicle 16 is closer or the approaching vehicle 16 switched the headlights from high beams to low beams. Step 1102 checks if a classified fused vehicle spot has a sudden significant decrease in spot size. If yes, the bright spot is potentially split into two separate bright spots. The new second bright spot may be detected. If, for example, the new bright spot in approximately the same horizontal line, then the classification of the vehicle spot is changed from a single fused spot to a vehicle spot based on paired bright spots. By this, the system 10 and the controller 36 may be configured to determine if a vehicle spot is previously classified as a fused spot includes an additional bright spot classifiable as a split spot.

Referring again to Fig. 2, Step 250, SCALE VEHICLE SPOT, may include scaling of vehicle spots is performed to estimate a separation distance 30 between the vehicle 14 and the approaching vehicle 16. The distance estimation is done using the boundaries of the vehicle spots based on paired bright spots, or based on a width of a fused vehicle spot. The boundaries are generally calculated based on the width of saturated pixels of the image so that the distance estimation has less effect due to halo of the spots. As such, the scaled images may be used to estimate a time to collision (TTC).

Referring again to Fig. 2, Step 260, DETERMINE TTC, may include determining a time to collision (TTC) based on distance estimation and relative velocity (i.e. rate of change of the separation distance 30) to the approaching vehicle 16. As such, the system 10 may be configured to determine that a rear collision is likely when the time to collision is less than a predetermined time period, for example less than 0.5 seconds. In case of tailgating by the approaching vehicle, the TTC value may be high because the relative velocity is low, however if the separation distance is relatively low, less than 2 meters for example, a rear collision may be suitably deems as likely.

Referring again to Fig. 2, Step 270, ACTIVATE SAFETY DEVICE, may include activating a safety device such as the warning light 20, the warning alarm 22, the headrest 24, or the brake light 26 based on the estimated TTC. As such, it is would be desirable to equip the system 10 with a safety device coupled to the controller 36 and operable in response to the indication that a collision is likely.

Figure 12 illustrates a non-limiting example of an image 52 from a sequence of images output by the rear-view camera 32 (Fig. 1). For the purpose of illustration, the image 52 is shown as a negative image so that the dark areas are indicative of bright spots correspond to light sources present in the field of view 34, and the light areas of image 52 correspond to darkness in the field of view 34. Also, the blocky, pixilated appearance of the dark areas in the image 52 suggests that the rear-view camera 32 has very low definition, and that the intensity resolution of each pixel is limited to only black or white. This is only for the purpose illustration and it should be appreciated that an actual image from a typical camera would likely not have the blocky appearance, and each pixel-intensity could be variably indicated, for example, using a 256 level gray-scale.

Continuing to refer to Fig. 1 and Fig. 12, the image 52 is illustrated as having five bright spots 54A, 54B, 54C, 54D, and 54E corresponding to light sources present in the field of view 34. As will become apparent in the description below, bright spot 54A is an example of bright spot from an approaching vehicle 16 following at a relatively large separation distance, 50 meters for example. Bright spots 54B-E are an example of a combination of bright spots from another approaching vehicle following are a relatively small separation distance, less than 10 meters for example, where bright spots 54B-C are headlights, and bright spots 54D-E are fog lights.

While Fig. 12 shows all the bright spots at once, and so suggests that two vehicles are in the field of view 34, it should be apparent that an image having only bright spot 54A would indicate that a single vehicle was following at a relatively large separation distance, and an image having only bright spots 54B-E would indicate that a single vehicle was following at a relatively small separation distance.

Each bright spot is analyzed as described above with regard to Figs. 2-11 for features such as, but not limited to, size (is the bright spot big enough?), location (is the bright spot not in the sky, e.g. the bright spot is in the lower 60% of the image 52), etc., to determine if a bright spot exhibits features corresponding to a vehicle spot. The algorithms described in Fig. 2-11 would likely pair bright spot 54B with 54C because, along with other reasons, they have similar vertical displacements from a horizontal line 56. However, bright spot 54A is not likely to be paired with another bright spot, and so may be classified as a fused spot.

If the image suggested above having only bright spot 54A was an image previous to a subsequent image having only bright spots 54B-E, then it should be apparent that the approaching vehicle shown in the temporally separated images indicates that the approaching vehicle is getting closer, for example, based on the classification of the vehicle spot and changes of a vehicle spot size in the sequence of images. For example, if a sequence if intermediate images from moments in time between the only bright spot 54A image and the only bright spots 54B-E image, it can be understood how the bright spot 54A could change over time to become the bright spots 54B-E and so indicate that the separation distance 30 was decreasing. In particular, a horizontal distance 58 between paired bright spots will increase as the approaching vehicle gets closer. From a change in the horizontal distance 58 a time to collision (TTC) can be calculated. Based on the TTC, it can be determined if a collision is likely, and so the controller 36 may output an indication that a collision is likely.

Accordingly, a night-time rear collision warning system 10, a controller 36 for the system 10, and a method 200 of operating the system 10 is provided. Vehicle testing at night has confirmed the ability of such a system detect and track an approaching vehicle 16 at night. It was during development testing that it was observed that special condition algorithms to determine vehicle spots having fused bright spots, fog lights, bright spot pairs in side another pair, and split spots were desirable. The methods described herein provide for a system that can operate at night when no other information regarding the size or shape of the approaching vehicle 16 is available. The system 10 may be used on a vehicle as a stand-alone system or may be combined with parking guidance system and thereby share a camera and controller. The system 10 may advantageously use an existing Rear View Camera having 115 degree Field Of View imager and still track an approaching at a distance of 30 meters and beyond.

## Claims

1. A method (200) of operating a night-time rear collision warning system (10), said method (200) comprising:
a) providing a camera (32) configured to output an image signal (38) corresponding to a sequence of images of a field of view (34) behind a vehicle (14);
b) identifying (210) a bright spot (54A, 54B, 54C, 54D, 54E) in an image (52) corresponding to a light source present in the field of view (34);
c) determining (230) if a pair of the bright spots are indicative of a vehicle spot based on a comparison (315) of the pair of bright spots;
d) determining (420) if a single bright spot is a vehicle spot classified as a fused spot (54A) indicative of two light sources appearing as a single bright spot in an image, wherein the vehicle spot is reclassified as a split spot if the fused spot has a sudden decrease in saturated pixel count and two bright spots appear where the fused spot was after the sudden decrease in saturated pixel count;
e) determining (260), based on the classification of the vehicle spot and changes of a vehicle spot size in the sequence of images, if a collision is likely; and
f) if a collision is likely, outputting (270) an indication that a collision is likely.

2. The method (200) in accordance with claim 1, wherein the vehicle spot is classified (420) as a fused spot if (812) the vehicle spot has a saturated pixel count greater than a fused spot threshold.

3. The method (200) in accordance with claim 1, wherein the method (200) further comprises determining if the vehicle spot includes an additional bright spot (54D, 54E) classifiable as a fog light.

4. The method (200) in accordance with claim 1, wherein the method (200) further comprises determining if the vehicle spot includes an additional bright spot classifiable as a multiple bright spot indicative of the vehicle spot including more than two bright spots.

5. The method (200) in accordance with claim 1, wherein a collision is likely when the time to collision is less than a predetermined time period.

6. The method (200) in accordance with claim 1, wherein the method (200) further comprises activating a safety device coupled to the controller (36) when a collision is likely.

7. A night-time rear collision warning system (10) configured to perform the steps defined in claims 1 to 6.

8. A controller (36) for a night-time rear collision warning system (10) configured to perform the steps defined in claims 1 to 6.

## Patentansprüche

1. Ein Verfahren (200) für einen Betrieb eines Nacht-Rückkollisionswarnsystems (10), wobei das Verfahren aufweist:
a) Vorsehen einer Kamera (32), die konfiguriert ist zum Ausgeben eines Bildsignals (38) entsprechend einer Sequenz von Bildern eines Sichtfelds (34) hinter einem Fahrzeug (14);
b) Identifizieren (210) eines hellen Punkts (54A, 54B, 54C, 54D, 54E) in einem Bild (52) entsprechend einer in dem Sichtfeld (34) vorhandenen Lichtquelle;
c) Bestimmen (230), ob ein Paar der hellen Punkte einen Fahrzeugpunkt angibt, basierend auf einem Vergleich (315) des Paares von hellen Punkten;
d) Bestimmen (420), wenn ein einzelner heller Punkt ein Fahrzeugpunkt ist, der als ein verschmolzener Punkt (54A) klassifiziert wird, der zwei Lichtquellen angibt, die als ein einzelner heller Punkt in einem Bild erscheinen, wobei der Fahrzeugpunkt als ein geteilter Punkt neuklassifiziert wird, wenn der verschmolzene Punkt eine plötzliche Abnahme der Anzahl gesättigter Pixel hat und zwei helle Punkte erscheinen, wo der verschmolzene Punkt war, nach der plötzlichen Abnahme der Anzahl gesättigter Pixel;
e) Bestimmen (260), basierend auf der Klassifizierung des Fahrzeugpunkts und Änderungen einer Fahrzeugpunktgröße in der Sequenz von Bildern, ob eine Kollision wahrscheinlich ist; und
f) wenn eine Kollision wahrscheinlich ist, Ausgeben (270) eine Angabe, dass eine Kollision wahrscheinlich ist.

2. Das Verfahren (200) gemäß Anspruch 1, wobei der Fahrzeugpunkt als ein verschmolzener Punkt klassifiziert wird (420), wenn (812) der Fahrzeugpunkt eine Anzahl gesättigter Pixel größer als eine verschmolzene Punktschwelle hat.

3. Das Verfahren (200) gemäß Anspruch 1, wobei das Verfahren (200) weiter ein Bestimmen aufweist, ob der Fahrzeugpunkt einen zusätzlichen hellen Punkt (54D, 54E) umfasst, der als ein Nebellicht klassifizierbar ist.

4. Das Verfahren (200) gemäß Anspruch 1, wobei das Verfahren (200) weiter ein Bestimmen aufweist, ob der Fahrzeugpunkt einen zusätzlichen hellen Punkt umfasst, der als ein heller Mehrfachpunkt klassifizierbar ist, der angibt, dass der Fahrzeugpunkt mehr als zwei helle Punkte umfasst.

5. Das Verfahren (200) gemäß Anspruch 1, wobei eine Kollision wahrscheinlich ist, wenn die Zeit bis zur Kollision geringer als eine vorgegebene Zeitperiode ist.

6. Das Verfahren (200) gemäß Anspruch 1, wobei das Verfahren (200) weiter aufweist ein Aktivieren einer Sicherheitsvorrichtung, die mit der Steuervorrichtung (36) gekoppelt ist, wenn eine Kollision wahrscheinlich ist.

7. Ein Nacht-Rückkollisionswarnsystem (10), das konfiguriert ist zum Durchführen der in den Ansprüchen 1 bis 6 definierten Schritte.

8. Eine Steuervorrichtung (36) für ein Nacht-Rückkollisionswarnsystem (10), das konfiguriert ist zum Durchführen der in den Ansprüchen 1 bis 6 definierten Schritte.

## Revendications

1. Procédé (200) pour le fonctionnement d'un système d'avertissement de collision arrière nocturne (10), ledit procédé (200) comprenant les étapes consistant à :
a) prévoir une caméra (32) configurée pour fournir un signal d'image (38) correspondant à une séquence d'images d'un champ de vision (34) derrière un véhicule (14) ;
b) identifier (210) une tache brillante (54A, 54D, 54C, 54D, 54E) dans une image (52) correspondant à une source de lumière présente dans le champ de vision (34) ;
c) déterminer (230) si une paire de taches brillantes sont une indication d'une tache véhiculaire sur la base d'une comparaison (315) de la paire de taches brillantes ;
d) déterminer (420) si l'unique tache brillante et une tache véhiculaire classifiée comme une tache fusionnée (54A) indicative de deux sources de lumière apparaissant comme une unique tache brillante dans une image, telle que la tache véhiculaire est reclassifiée comme une tache scindée si la tache fusionnée présente une diminution soudaine d'un décompte de pixels saturés et que deux taches brillantes apparaissent là où la tache fusionnée se trouvait après la diminution soudaine du décompte de pixels saturés ;
e) déterminer (260), sur la base de la classification de la tache véhiculaire et des changements d'une taille de tache véhiculaire dans la séquence d'images, si une collision est vraisemblable; et
f) si une collision est vraisemblable, délivrer (270) une indication qu'une collision est vraisemblable.

2. Procédé (200) selon la revendication 1, dans lequel la tache véhiculaire est classifier (420) comme une tache fusionnée si (812) la tache véhiculaire a un décompte de pixels saturés plus élevé qu'un seuil de tache fusionnée.

3. Procédé (200) selon la revendication 1, dans lequel le procédé (200) comprend en outre l'étape consistant à déterminer si la tache véhiculaire inclut une tache brillante additionnelle (54D, 54E) susceptible d'être classifiée comme un feu antibrouillard.

4. Procédé (200) selon la revendication 1, dans lequel le procédé (200) comprend en outre l'étape consistant à déterminer si la tache véhiculaire inclut une tache brillante additionnelle susceptible d'être classifiée comme une tache brillante multiple indicative de la tache véhiculaire qui inclut plus de deux taches brillantes.

5. Procédé (200) selon la revendication 1, dans lequel une collision est vraisemblable quand le temps jusqu'à la collision est inférieur à une période temporelle prédéterminée.

6. Procédé (200) selon la revendication 1, dans lequel le procédé (200) comprend en outre l'étape consistant à activer un dispositif de sécurité couplé au contrôleur (36) quand une collision est vraisemblable.

7. Système d'avertissement de collision arrière nocturne (10) configuré pour exécuter les étapes définies dans les revendications 1 à 6.

8. Contrôleur (36) pour un système d'avertissement de collision arrière nocturne (10) configuré pour exécuter les étapes définies dans les revendications 1 à 6.
